# EUROPÄISCHE PATENTSCHRIFT

(11) **EP 1 765 902 B1**
(45) Veröffentlichungstag und Bekanntmachung des Hinweises auf die Patenterteilung: **14.10.2009**
(21) Anmeldenummer: 05752890.3
(22) Anmeldetag: 22.06.2005
(51) Int. Cl.: C08G 18/32, C08G 65/22

(54) **VISKOSITÄTSSENKER FÜR HOCHVISKOSE POLYOLE**
VISCOSITY REDUCER FOR HIGHLY VISCOUS POLYOLS
REDUCTEUR DE VISCOSITE DESTINE A DES POLYOLS A VISCOSITE ELEVEE

(30) Priorität: 01.07.2004 DE 102004031787
(43) Veröffentlichungstag der Anmeldung: 28.03.2007
(73) Patentinhaber: Cognis IP Management GmbH, 40589 Düsseldorf (DE)
(72) Erfinder: ROLOFF, Thorsten, 40597 Düsseldorf (DE); HÖFER, Rainer, 40477 Düsseldorf (DE)
(86) Internationale Anmeldenummer: PCT/EP2005/006742
(87) Internationale Veröffentlichungsnummer: WO 2006/002812

(56) Entgegenhaltungen:
- GB-A- 877 134
- US-A1- 2003 050 357

## Beschreibung

### Gebiet der Erfindung

Die Erfindung betrifft Ringöffnungsprodukte von Epoxiden von Fettsäuremethylestem mit Alkanolen oder Wasser eignen sich in hervorragender Weise als Viskositätsregulatoren (Viskositätssenker) für hochviskose Polyole.

### Stand der Technik

Ringöffnungsprodukte von Epoxiden von Triglyceriden, die ungesättigte Fettsäurebausteine enthalten und Ringöffnungsprodukte von Epoxiden von Fettsäuremethylestern, die ungesättigte Fettsäurebausteine enthalten, sind seit langem bekannt. Insbesondere sind Ringöffnungsprodukte solcher Epoxide mit Alkoholen bekannt. Die entsprechenden Epoxide sind durch Epoxidation von Triglyceriden, die ungesättigte Fettsäurebausteine enthalten bzw. von Fettsäuremethylestern, die ungesättigte Fettsäurebausteine enthalten, zugänglich.

Bei der Ringöffnung der genannten Epoxide mit Alkoholen bzw. Polyolen werden die in den Epoxiden enthaltenen Oxiranringe chemisch so modifiziert, daß an benachbarten C-Atomen eine OH-Gruppe und eine Ethergruppe entstehen. Derart gebildete OH-Gruppen stehen für weitere Reaktionen, wie z.B. zur Umsetzung mit Isocyanaten zu Polyurethanen zur Verfügung.

Ein typisches Beispiel für die Verwendung der genannten Ringöffnungsprodukte ist in EP-B-259,722 offenbart. Hier wird ein Verfahren zur Herstellung massiver Polyurethanwerkstoffe im Gießverfahren unter Verwendung wenigstens zwei Isocyanatgruppen pro Molekül enthaltender Isocyanate und mindestens zwei Hydroxygruppen pro Molekül enthaltender Alkohole beschrieben. Dabei kommen als Polyurethanbausteine inter alia Polyole zum Einsatz, die erhältlich sind, indem man einwertige Alkohole mit 1 bis 8 C-Atomen an epoxidierte Triglyceridöle addiert, die gegebenenfalls gereinigten Additionsprodukte gewünschtenfalls mit Alkylenoxiden mit 2 bis 4 C-Atomen zur Reaktion bringt, die Produkte vor oder nach der Alkoxylierung gegebenenfalls einer thermischen Nachbehandlung unterzieht.

DE-A-42,01,343 beschreibt Ringöffnungsprodukte von epoxidierten Fettsäureestern, z.B. Methylepoxyoctadecanoat (epoxidierter Ölsäuremethylester) zur Senkung des Pour Points für Schmieröle.

GB-877,134 beschreibt die Polymerisation von Epoxiden ungesättigter Fettsäuren und ihrer Ester zu Polyethern in Gegenwart von Bortrifluorid. Die entstehenden Polymeren eignen sich zur Verbesserung des Viskositätsindex und die Schmiereigenschaften von Mineralölen.

### Beschreibung der Erfindung

Epoxid-Ringöffnungsprodukte der in EP-B-259,722 genannten speziellen Art, nämlich Polyole, die erhältlich sind, indem man einwertige Alkohole mit 1 bis 8 C-Atomen an epoxidierte Triglyceridöle addiert, die gegebenenfalls gereinigten Additionsprodukte gewünschtenfalls mit Alkylenoxiden mit 2 bis 4 C-Atomen zur Reaktion bringt, die Produkte vor oder nach der Alkoxylierung gegebenenfalls einer thermischen Nachbehandlung unterzieht, weisen in der Regel relativ hohe Viskositäten auf, die die Handhabbarkeit, etwa die Rührbarkeit, Gießbarkeit und Pumpbarkeit, insbesondere bei tieferen Temperaturen, oft aber auch bei Temperaturen um 20 °C, erschwert.

Aufgabe der vorliegenden Erfindung war es, Viskositätsregulatoren für hochviskose Polyole, insbesondere die gerade genannten Epoxid-Ringöffnungsprodukte, bereitzustellen. Diese Viskositätsregulatoren sollten bereits bei relativ niedrigen Einsatzmengen wirksam sein.

Darüber hinaus sollte gewährleistet sein, daß die genannten Polyole, die mittels der Viskositätsregulatoren auf eine geeignete niedrige Viskosität eingestellt wurden, sich ohne Nachteile mit Polyisocyanaten bei der Herstellung von Polyurethanen einsetzen lassen.

Es wurde nun gefunden, dass Ringöffnungsprodukte von Epoxiden von Fettsäuremethylestem mit Alkanolen oder Wasser besonders niedrigviskose Substanzen darstellen, die sich als Viskositätsregulatoren eignen. Insbesondere eignen sie sich als Viskositätsregulatoren für Polyole (b) wie sie beispielsweise bei der Herstellung von Polyurethanen Verwendung finden .

Gegenstand der vorliegenden Erfindung ist die Verwendung von Ringöffnungsprodukten von Epoxiden von Fettsäuremethylestem mit Alkanole oder Wasser als Viskostätsregulatoren (Viskositätssenker) für Polyole (b).

Die erfindungsgemäß als Viskositätsmgiamren (Viskositätssenker) einzusetzenden Ringöffnungsprodukte von Epoxiden von Fettsäuremethylestem mit Alkanolen oder Wasser werden nachfolgend auch als Viscomod-Vexbindungen (a) bezeichnet.

Als Polyole (b) - also viskositätsmäßig mittels der Verbindungen (a) zu modifizierende Substanzen - werden Verbindungen eingesetzt, die erhältlich sind, indem man einwertige Alkohole mit 1 bis 8 C-Atomen an epoxidierte Triglyceridöle addiert, und die gegebenenfalls gereinigten Additionsprodukte gewünschtenfalls mit Alkylenoxiden mit 2 bis 4 C-Atomen zur Reaktion bringt, und die Produkte gegebenenfalls einer thermischen Nachbehandlung unterzieht. Die Verbindungen dieses Typs hochviskoser Polyole werden nachfolgend auch als high-Visco-Polyols (b) bezeichnet.

### Zu den Viscomod-Verbindungen (a)

Die erfindungsgemäß als Viskositätsregulatoren einzusetzenden Ringöffnungsprodukte von Epoxiden von Fettsäuremethylestem mit Alkanolen oder Wasser werden nachfolgend auch als Viscomod-Verbindungen (a) bezeichnet.

Unter "Epoxiden von Fettsäuremethylestem" (e) werden Verbindungen verstanden, die durch Epoxidation von Methylestern ungesättigter Fettsäuren zugänglich sind. Setzt man diese Verbindungen (e) mit Alkanolen und/oder Wasser um, so werden die in (e) vorhandenen Oxiranringe geöffnet, wobei die Viscomod-Verbindungen (a) entstehen.

Unter "Alkanolen" werden in diesem Zusammenhang Verbindungen bezeichnet, die an einem aliphatischen Grundgerüst mit 1 bis 20 C-Atomen, das gesättigt, oder ungesättigt, geradkettigt oder verzweigt sein kann, 1 bis 6 OH-Gruppen vorhanden sind. Dabei gilt selbstverständlich die Randbedingung, daß die maximale Zahl der OH-Gruppen durch die zahl der C-Atome des Alkanols beschränkt ist. Ein Alkanol mit 1 C-Atom kommt demnach nur Methanol in Frage, ein Alkanol mit 2 C-Atomen kann 1 oder 2 OH-Gruppen aufweisen (Ethanol oder Ethan-1,2-diol), usw. Vorzugsweise weisen die Alkanole außer den OH-Gruppen keine weiteren funktionellen Gruppen auf. Weiterhin ist es bevorzugt, daß es sich um Alkanole mit 1 bis 8 C-Atomen handelt, die maximal 3 OH-Gmppen pro Molekül enthalten. Alkanole mit 1 bis 6 C-Atomen und 1 bis 3 OH-Gruppen pro Molekül sind ganz besonders bevorzugt, insbesondere Methanol, Ethanol, Propanol, Butanol, Glykol, Glycerin, Trimethylolpropan.

Besonders bevorzugt sind diejenigen Viscomod-Verbindungen (a), deren Brookfield-Viskosität (gemessen in Substanz bei 25 °C) unterhalb von 800 und insbesondere unterhalb von 400 mPas liegt.

### Zu den high-Visco-Polyols (b)

Wie bereits gesagt handelt es sich bei den high-Visco-Polyols (b) um Polyole, die erhältlich sind, indem man einwertige Alkohole mit 1 bis 8 C-Atomen an epoxidierte Triglyceridöle addiert, und die gegebenenfalls gereinigten Additionsprodukte gewünschtenfalls mit Alkylenoxiden mit 2 bis 4 C-Atomen zur Reaktion bringt und die Produkte gegebenenfalls einer thermischen Nachbehandlung unterzieht. Epoxidierte Triglyceridöle - wie sie zur Herstellung von high-Visco-Polyols (b) eingesetzt werden können - sind als solche aus dem Stand der Technik bekannt. Sie finden etwa in anderen technischen Bereichen als sogenannte "Epoxidweichmacher" Verwendung und sind für diese Zwecke auch im Handel kommerziell erhältlich.

Epoxidierte Triglyceridöle sind durch Epoxidation ungesättigter Öle, beispielsweise Sojaöl, Rapsöl, Leinöl, Tallöl, Baumwollsaatöl, Erdnußöl, Palmöl, Sonnenblumenöl (alter und neuer Züchtung), Rüböl oder Klauenöl, beispielsweise in Gegenwart katalytischer Mengen von Peressigsäure oder Perameisensäure zugänglich. Durch die Epoxidation werden - je nach eingesetzter Menge Peressigsäure - die olefinischen Doppelbindungen der Fettsäurebausteine des Triglycerids ganz oder teilweise in Oxiranringe überführt. Bevorzugt als ungesättigte Öle sind Triglyceride mit einer Jodzahl von 50 bis 200, die bei weitgehender Epoxidation der olefinischen Doppelbindungen in Epoxidate mit einem Gehalt von 3 bis 10 Gew.- % Epoxidsauerstoff überführt werden. Besonders bevorzugt sind epoxidierte Triglyceridöle mit einem Gehalt von 4 bis 8 Gew.-% Epoxidsauerstoff.

Besonders bevorzugte Substanzen aus der Gruppe der epoxidierten Triglyceride bzw. deren Alkylestern sind:
- Epoxidiertes Sojaöl (z.B. Handelsprodukt "Edenol D 81" der Cognis Deutschland GmbH & Co.KG),
- epoxidiertes Leinöl (z.B. Handelsprodukt "Edenol B 316" der Cognis Deutschland GmbH & Co. KG) und

Zur Ringöffnung der epoxidierten Triglyceridöle werden wie schon gesagt ein-und/oder mehrwertige Alkohole mit 1 bis 8 C-Atomen eingesetzt. Als Alkohole kommen dabei sowohl geradkettige Alkohole wie Methanol, Ethanol, n-Propanol, n-Butanol, n-Pentanol, n-Hexanol, n-Heptanol, n-Octanol, Glykol, Trimethylolpropan als auch deren in der Alkylkette verzweigte bzw. die Hydroxylgruppe an einem sekundären oder tertiären C-Atom tragenden Isomeren, beispielsweise i-Propanol, i-Butanol oder 2-Ethylhexylalkohol in Frage. Bevorzugt werden für die Addition an epoxidierte Triglyceridöle und/oder deren Alkylester Alkohole aus der Gruppe Methanol, Ethanol, n-Propanol, i-Propanol, n-Butanol, i-Butanol, t-Butanol und 2-Ethylhexylakohol verwendet. Von diesen ist Methanol besonders bevorzugt.

Die Addition von ein- und/oder mehrwertigen Alkoholen mit 1 bis 8 Kohlenstoffatomen an epoxidierte Triglyceridöle wird - wie aus dem Stand der Technik bekannt - bevorzugt in Gegenwart eines sauren Katalysators durchgeführt. Als saure Katalysatoren kommen beispielsweise übliche Mineralsäuren, wie beispielsweise konzentrierte Schwefelsäure, in Frage. Es ist jedoch auch möglich, als saure Katalysatoren LewisSäuren, wie Bortrihalogenide oder deren Derivate, zu verwenden oder die Reaktion in Gegenwart eines sauren Ionenaustauschers durchzuführen. Die Verwendung saurer Ionenaustauscher ist wegen der optimalen Möglichkeit der Abtrennung des Katalysators von der Reaktionsmischung besonders bevorzugt. Der Ringöffnungskatalysator kann nach der Reaktion ausgewaschen und ausgefällt werden oder - nach Neutralisation - im Reaktionsprodukt verbleiben. Bevorzugte Verfahrensweise ist die Neutralisation mit Natriummethylat oder insbesondere mit Dialkylethanolaminen, vorzugsweise Dimethyl- oder Diethylethanolamin, unter Belassung des Neutralisationsproduktes im Produktgemisch.

Bei der Addition von ein- und/oder mehrwertigen Alkoholen mit 1 bis 8 C-Atomen an epoxidierte Triglyceridöle wird ein Molverhältnis (Alkohol) : (Triglyceridöl) im Bereich von 1,05 bis 10, vorzugsweise von 3 bis 10 mol Alkohol pro Mol Epoxidsauerstoff eingestellt. Dies bedeutet, daß in der Praxis regelmäßig ein Überschuss Alkohol in die Additionsreaktion eingesetzt wird, um sicherzustellen, daß mehr oder weniger alle Oxiranringe geöffnet und in HO-C-C-OR-Gruppen überführt werden, in denen R für den Alkylrest des eingestzten Alkohols mit bis 8 C-Atomen steht.

Die auf die beschriebene Weise zugänglichen Polyole können nach an sich bekannten Methoden von überschüssigen bzw. nicht umgesetzten Edukten befreit werden. Beispielsweise lässt sich der zur Öffnung der Oxiranringe in den epoxidierten Triglyceridölen und/oder deren Alkylester im Überschuß eingesetze Alkohol durch Destillation, gegebenenfalls unter vermindertem Druck, abkondensiert. Es sind jedoch auch andere, in diesem Bereich an sich bekannte Methoden der Reinigung möglich.

In einer Ausführungsform setzt man die durch Umsetzung von epoxidierten Triglyceridölen und/oder deren Alkylester mit C₁₋₈-Alkoholen zugänglichen Polyole mit Propylenoxid um. Die hierfür erforderlichen Bedingungen sind dem Fachmann einschlägig bekannt. Vorzugsweise stellt man bei der Propoxylierrung ein Molverhältnis (Alkylenoxid) : (mit ein- und/oder mehrwertigen C₁₋₈-Alkoholen ringgeöffnetem epoxidiertem Triglyceridöl und/oder deren Alkylester) einen Wert im Bereich von 1 bis 10 mol Propylenoxid pro Mol Epoxidsauerstoff ein.

Gewünschtenfalls kann man die wie gerade beschrieben zugänglichen Polyole einer thermischen Nachbehandlung unterziehen. Sofern im Zuge der Herstellung der Polyole wie oben beschrieben eine Propoxylierung durchgeführt wurde, kann die thermische Nachreaktion vor und/oder nach der Propoxylierung durchgeführt werden; vorzugsweise wird sie jedoch nach der Propoxylierung durchgeführt.

Die thermische Nachbehandlung der Polyole ist deswegen vorteilhaft, weil dabei der Wassergehalt des Polyols auf diese Weise praktisch auf Null reduziert werden kann, d.h. Polyole zur Verfügung stehen, die weitgehend wasserfrei sind.

### Zur erfindungsgemäßen Verwendung

Wie bereits gesagt eignen sich die Verbindungen (a) in ausgezeichneter Weise, die Viskosität von Polyolen vom Typ (b) im Sinne einer Viskositätssenkung zu regulieren. Auf diese Weise lassen sich nicht nur die Verbindungen (b) besser handhaben, sondern Gemische von (a) und (b) - wobei die Verbindungen (a) in der Regel nur in relativ geringen Mengen von 1 bis 20% zu den Verbindungen (b) zudosiert werden müssen - sind auf Grund ihrer geringeren Viskosität besser für die Umsetzung mit Polyisocyanaten bei der Polyurethanhersteltung geeignet als die Verbindungen (b) alleine.

Dabei liegt ein weiterer Vorteil der Verbindungen (a) darin, daß sie wegen der vorhandenen OH-Gruppen in Polyurethane eingebaut werden können. In diesem Sinne können sie als Reaktivverdünner aufgefasst werden, das heißt als Verdünnungsmittel für hochviskose Polyole, die - weil sie über ein oder mehrere gegenüber NCO-Gruppen reaktive OH-Gruppen verfügt - gleichzeitig eine Zusatzfunktion als Reaktionskomponente für die Polyurethanreaktion haben können.

### Einsatz bei der Herstellung von Polyurethanen

Ein weiterer Erfindungsgegenstand ist ein Verfahren zur Herstellung von Polyurethanen durch Umsetzung von Polyolen (b), die vorzugsweise ausgewählt werden aus den Verbindungen, die erhältlich sind, indem man einwertige Alkohole mit 1 bis 8C-Atomen an epoxidierte Triglyceridöle addiert, und die gegebenenfalls gereinigten Additionsprodukte gewünschtenfalls mit Alkylenoxiden mit 2 bis 4C-Atomen zur Reaktion bringt, mit Polyisocyanaten, dadurch gekennzeichnet, daß man die Viskosität der Polyole (b) durch den Zusatz von Ringöffnungsprodukten von Epoxiden von Fettsäuremethylestern mit Alkanolen oder Wasser (also den Zusatz der oben genannten Verbindungen (a)) reguliert.

### Beispiele

### Eingesetzte Substanzen

### Verbindungen aus der Gruppe der Viscomod-Verbindungen (a)

**Sovermol 710:** Fettsäuremethylesterepoxid ringgeöffnet mit Methanol (Handelsprodurkt "Sovermol 710" der Firma Cognis)
**Sovermol 1102:** Pettsäuremethylesterepoxid ringgeöffnet mit Ethandiol (Handelsprodukt Sovermol 1068" der Firma Cognis)

### Verbindungen aus der Gruppe der high-Visco-Polyols (b)

**Sovermol 1068:** Fettsäuretriglyceridepoxid ringgeöffnet mit Methanol (Handelsprodukt "Sovermol 1102" der Firma Cognis)

### Beispiele zur Viskositätssenkung

### Vergleichsbeispiel A

Die Brookfield-Viskosität von Sovermol 1068 wurde bei 25°C gemessen (Spindel 21 / 6 Umdrehungen/min). Sie betrug 3620 mPas.

### Vergleichsbeispiel B

Die Brookfield-Viskosität von Sovermol 710 wurde bei 25°C gemessen (Spindel 21/6 Umdtehungen/min). Sie betrug 70 mPas.

### Beispiel 1

90 Gewichtsteile Sovermol 1068 und 10 Gewichtsteile Sovermol 710 wurden miteinander vermischt. Die Brooktield-Viskosität der Mischung (25°C / Spindel 21/6 Umdrehungen/min) betrug 2325 mPas.

### Beispiel 4

80 Gewichtsteile Sovermol 1068 und 20 Gewichtsteile Sovermol 1102 wurden miteinander vermischt. Die Brookfield- Viskosität der Mischung (25 °C / Spindel 21 / 6 Umdrehungen/min) betrug 1858 mPas.

Aus den Beispielen ist ersichtlich, dass die Viskositäts-regulierenden Eigenschaften der Verbindungen (a) im Hinblick auf die Verbindungen (b) ausgezeichnet sind.

## Patentansprüche

1. Verwendung von Ringöffnungsprodukten von Epoxiden von Fettsäuremethylestern mit Alkanolen oder Wasser als Viskositätsregulatoren (a) für Polyole (b), wobei die Polyole (b) erhältlich sind, indem man einwertige Alkohole mit 1 bis 8C-Atomen an epoxidierte Triglyceridöle addiert, und die gegebenenfalls gereinigten Additionsprodukte gewünschtenfalls mit Alkylenoxiden mit 2 bis 4C-Atomen zur Reaktion bringt und die Produkte gegebenenfalls einer thermischen Nachbehandlung unterzieht.

2. Verwendung nach Anspruch 1, wobei die Viskositätsregulatoren Ringöffnungsprodukten von Epoxiden von Fettsäuremethylestern mit Alkanolen mit 1 bis 6C-Atomen und 1 bis 3 OH-Gruppen pro Molekül sind.

3. Verwendung nach Anspruch 2, wobei die Alkanole ausgewählt sind aus der Gruppe Methanol, Ethanol, Propanol, Butanol, Glykol, Glycerin und Trimethylolpropan.

4. Verwendung nach Anspruch 1, wobei die Viskositätsregulatoren Ringöffnungsprodukten von Epoxiden von Fettsäuremethylestern mit Wasser sind.

5. Verwendung nach einem der Ansprüche 1 bis 4, wobei die Polyole (b) ausgewählt werden aus den Verbindungen, die erhältlich sind, indem man einwertige Alkohole mit 1 bis 8 C-Atomen an epoxidierte Triglyceridöle addiert, und die gegebenenfalls gereinigten Additionsprodukte gewünschtenfalls mit Alkylenoxiden mit 2 bis 4C-Atomen zur Reaktion bringt.

6. Verfahren zur Herstellung von Polyurethanen durch Umsetzung von Polyolen (b) - wobei die Polyole (b) erhältlich sind, indem man einwertige Alkohole mit 1 bis 8C-Atomen an epoxidierte Triglyceridöle addiert, und die gegebenenfalls gereinigten Additionsprodukte gewünschtenfalls mit Alkylenoxiden mit 2 bis 4C-Atomen zur Reaktion bringt und die Produkte gegebenenfalls einer thermischen Nachbehandlung unterzieht - mit Polyisocyanaten, **dadurch gekennzeichnet, daß** man die Viskosität der Polyole (b) durch den Zusatz von Ringöffnungsprodukten von Epoxiden von Fettsäuremethylestem mit Alkanolen oder Wasser reguliert.

7. Verfahren nach Anspruch 6, wobei die Polyole (b) ausgewählt werden aus den Verbindungen, die erhältlich sind, indem man einwertige Alkohole mit 1 bis 8C-Atomen an epoxidierte Triglyceridöle addiert, und die gegebenenfalls gereinigten Additionsprodukte gewünschtenfalls mit Alkylenoxiden mit 2 bis 4C-Atomen zur Reaktion bringt, mit Polyisocyanaten.

## Claims

1. The use of ring opening products of epoxides of fatty acid methyl esters with alkanols or water as viscosity adjusters (a) for polyols (b), said polyols (b) being obtainable by addition of monohydric C₁₋₈ alcohols onto epoxidized triglyceride oils and optionally reacting the optionally purified addition products with C₂₋₄ alkylene oxides and optionally subjecting the products to a thermal aftertreatment.

2. The use claimed in claim 1, the viscosity adjusters being ring opening products of epoxides of fatty acid methyl esters with alkanols containing 1 to 6 carbon atoms and 1 to 3 OH groups per molecule.

3. The use claimed in claim 2, the alkanols being selected from the group consisting of methanol, ethanol, propanol, butanol, glycol, glycerol and trimethylol propane.

4. The use claimed in claim 1, the viscosity adjusters being ring opening products of epoxides of fatty acid methyl esters with water.

5. The use claimed in any of claims 1 to 4, the polyols (b) being selected from the compounds obtainable by addition of monohydric C₁₋₈ alcohols onto epoxidized triglyceride oils and optionally reacting the optionally purified addition products with C₂₋₄ alkylene oxides.

6. A process for the production of polyurethanes by reaction of polyols (b), said polyols (b) being obtainable by addition of monohydric C₁₋₈ alcohols onto epoxidized triglyceride oils and optionally reacting the optionally purified addition products with C₂₋₄ alkylene oxides and optionally subjecting the products to a thermal aftertreatment, with polyisocyanates, **characterized in that** the viscosity of the polyols (b) is adjusted by the addition of ring opening products of epoxides of fatty acid methyl esters with alkanols or water.

7. The process as claimed in claim 6, wherein the polyols (b) are selected from compounds obtainable by addition of monohydric C₁₋₈ alcohols onto epoxidized triglyceride oils and optionally reacting the optionally purified addition products with C₂₋₄ alkylene oxides with polyisocyanates.

## Revendications

1. Utilisation de produits d'ouverture de cycle d'époxydes d'esters méthyliques d'acides gras avec des alcanols ou de l'eau, en tant que régulateurs de viscosité (a) pour des polyols (b), les polyols (b) pouvant être obtenus par fixation par addition d'alcools monohydriques ayant de 1 à 8 atomes de carbone sur des huiles de triglycérides époxydées, et mise en réaction des produits d'addition, éventuellement purifiés, si on le désire avec des oxydes d' alkylène ayant de 2 à 4 atomes de carbone, et éventuellement soumission des produits à un post-traitement thermique.

2. Utilisation selon la revendication 1, dans laquelle les régulateurs de viscosité sont des produits d'ouverture de cycle d'époxydes d'esters méthyliques d'acides gras avec des alcanols ayant de 1 à 6 atomes de carbone et comportant de 1 à 3 groupes OH par molécule.

3. Utilisation selon la revendication 2, dans laquelle les alcanols sont choisis dans le groupe constitué par le méthanol, l'éthanol, le propanol, le butanol, le glycol, le glycérol et le triméthylolpropane.

4. Utilisation selon la revendication 1, dans laquelle les régulateurs de viscosité sont des produits d'ouverture de cycle d'époxydes d'esters méthyliques d'acides gras avec de l'eau.

5. Utilisation selon l'une quelconque des revendications 1 à 4, dans laquelle les polyols (b) sont choisis parmi les composés qui peuvent être obtenus par fixation par addition d'alcools monohydriques ayant de 1 à 8 atomes de carbone sur des huiles de triglycérides époxydées et, si on le désire, mise en réaction des produits d'addition, éventuellement purifiés, avec des oxydes d'alkylène ayant de 2 à 4 atomes de carbone.

6. Procédé pour la préparation de polyuréthannes par mise en réaction de polyols (b) - les polyols (b) pouvant être obtenus par fixation par addition d'alcools monohydriques ayant de 1 à 8 atomes de carbone sur des huiles de triglycérides époxydées, et mise en réaction des produits d'addition, éventuellement purifiés, si on le désire avec des oxydes d'alkylène ayant de 2 à 4 atomes de carbone, et éventuellement soumission des produits à un post-traitement thermique - avec des polyisocyanates, **caractérisé en ce que** la viscosité des polyols (b) est régulée par l'addition de produits d'ouverture de cycle d'époxydes d'esters méthyliques d'acides gras avec des alcanols ou de l'eau.

7. Procédé selon la revendication 6, dans lequel les polyols (b) sont choisis parmi les composés qui peuvent être obtenus par fixation par addition d'alcools monohydriques ayant de 1 à 8 atomes de carbone sur des huiles de triglycérides époxydées et, si on le désire, mise en réaction des produits d'addition, éventuellement purifiés, avec des oxydes d'alkylène ayant de 2 à 4 atomes de carbone avec des polyisocyanates.
